(19) Europäisches Patentamt
European Patent Office
Office européen des brevets

(11) **EP 1 063 011 B1**

(12) **EUROPÄISCHE PATENTSCHRIFT**

(45) Veröffentlichungstag und Bekanntmachung des Hinweises auf die Patenterteilung:
**12.12.2001 Patentblatt 2001/50**

(51) Int Cl.$^7$: **B01J 23/60**, C01B 3/32

(21) Anmeldenummer: **99110069.4**

(22) Anmeldetag: **22.05.1999**

(54) **Verwendung eines Katalysators für die Dampfreformierung von Methanol**

Use of a catalyst for the steam reforming of methanol

Utilisation d'un catalyseur pour le réformage à la vapeur du méthanol

(84) Benannte Vertragsstaaten:
**BE DE DK ES FI FR GB IE IT LU NL PT SE**

(43) Veröffentlichungstag der Anmeldung:
**27.12.2000 Patentblatt 2000/52**

(73) Patentinhaber: **OMG AG & Co. KG**
**63457 Hanau (DE)**

(72) Erfinder:
• **WIELAND, Stefan**
 **Offenbach, 63069 (DE)**
• **Baumann, Frank**
 **63755 Alzenau-Wasserlos (DE)**
• **ADAM, Frank**
 **63579 Freigericht (DE)**
• **ANDERSCH, Stefan**
 **63579 Horbach (DE)**

(74) Vertreter: **Herrmann, Reinhard**
 **OMG AG**
 **FI-PAT**
 **Postfach 1351**
 **63403 Hanau (DE)**

(56) Entgegenhaltungen:
**EP-A- 0 614 698  EP-A- 0 864 360**
**WO-A-89/00886  FR-A- 2 567 866**
**GB-A- 2 276 332**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft die Verwendung eines Katalysators für die Dampf reformierung von Methanol, welcher als katalytisch aktive Komponenten eine Palladium/Zink-Legierung und Zinkoxid enthält. Der Katalysator wird insbesondere für die Dampfreformierung von Methanol zur Erzeugung eines wasserstoffreichen Gases eingesetzt, welches als Brennstoff für mit Brennstoffzellen angetriebene Kraftfahrzeuge verwendet werden kann.

Die Dampfreformierung von Methanol in Gegenwart von Katalysatoren ist ein bekanntes Verfahren zur Herstellung von wasserstoffreichen Gasmischungen, dem folgende endotherme Reaktion zugrunde liegt:

Dampfreformierung von Methanol:

$$CH_3OH + H_2O \rightarrow 3H_2 + CO_2 \qquad \Delta H > 0 \qquad (1)$$

Dabei kann es zu folgenden Nebenreaktionen kommen:

Reformierung von Methanol durch Methanolspaltung:

$$CH_3OH \rightarrow CO + 2H_2 \qquad \Delta H > 0 \qquad (2)$$

und

CO-Konvertierung:

$$CO + H_2O \leftrightarrow CO_2 + 3H_2 \qquad \Delta H < 0 \qquad (3)$$

Bei der Dampfreformierung gemäß Reaktionsgleichung (1) wird der Wasserdampf im Überschuß eingesetzt. Zur Charakterisierung des angewendeten Wasser-Überschusses dient das sogenannte "Steam/Carbon-Verhältnis" S/C. Gewöhnlich wird ein Wert für S/C zwischen 1,2 und 2,0 gewählt. Im Falle der Reformierung von Methanol ist S/C identisch mit dem Molverhältnis von Wasser zu Methanol.

Für die Verwendung in Brennstoffzellen werden Gasmischungen benötigt, die bei hohem Wasserstoffgehalt einen geringen Gehalt an Kohlenmonoxid aufweisen, da Kohlenmonoxid den Anodenkatalysator, an welchem die Oxidation des Brennstoffes abläuft, desaktiviert. Üblicherweise werden Gehalte des Brennstoffes an Kohlenmonoxid von unter 100 ppm, bevorzugt von weniger als 10 ppm, gefordert.

Wird der Brennstoff durch Reformierung von Methanol gewonnen, so läßt sich diese Forderung derzeit nur durch eine nachgeschaltete Reinigung des Reformatgases einhalten. Der hierfür notwendige Aufwand ist um so geringer, je niedriger der Gehalt des Reformatgases an Kohlenmonoxid ist.

Für die Anwendung in Kraftfahrzeugen werden aus Platz- und Gewichtsgründen Reformierungs-Katalysatoren benötigt, die eine sehr hohe spezifische Wasserstoffproduktivität und eine hohe Selektivität aufweisen, wobei zur Charakterisierung der Selektivität der Dampfreformierung die Selektivität der Bildung von Kohlendioxid herangezogen wird.

Unter spezifischer Wasserstoffproduktivität $P_{Kat}$ des Katalysators wird im Rahmen dieser Erfindung das pro Masse $M_{Kat}$ des Katalysators und Reaktionsdauer t erzeugte Volumen $V_{H2}$ an Wasserstoff verstanden, wobei die Katalysatormasse in Kilogramm, die Reaktionsdauer in Stunden und das Volumen in Normkubikmeter angegeben wird:

$$P_{Kat} = \frac{V_{H2}}{M_{Kat} \cdot t} \qquad \left[ \frac{Nm^3}{kg_{Kat} \cdot h} \right] \qquad\qquad (4)$$

Die Kohlendioxid-Selektivität $S_{CO2}$ der Dampfreformierung wird mit Hilfe der Partialdrücke des gebildeten Kohlendioxids $p_{CO2}$ und des Kohlenmonoxids $p_{CO}$ berechnet als

$$S_{CO2} = \frac{p_{CO2}}{p_{CO2} + p_{CO}} \, [\%], \qquad\qquad (5)$$

Eine hohe spezifische Aktivität ist die Voraussetzung zur Erzielung einer hohen Raum-Zeit-Ausbeute, welche es ermöglicht, das Reaktorvolumen der Dampfreformierung klein zu halten. Durch eine hohe Selektivität kann auch der Platzbedarf für die Gasreinigung vermindert werden.

Die EP 0687648 A1 beschreibt ein zweistufiges Verfahren zur Durchführung der Methanol-Reformierung, wobei das Methanol in der ersten Stufe in einem wärmeübergangsoptimierten Prozeß bei einer hohen spezifischen Katalysatorbelastung unvollständig umgesetzt wird und anschließend in einer umsatzoptimierten zweiten Stufe bei geringerer spezifischer Katalysatorbelastung eine den Methanolumsatz vervollständigende Reaktion durchgeführt wird. In der ersten Stufe wird der Katalysator möglichst hoch belastet, vorzugsweise mit mehr als 10 $Nm^3/h$ $H_2$ pro Kilogramm Katalysator. Als Katalysatorformen werden Pellet-Katalysatoren und auch mit Katalysator beschichtete Bleche vorgeschlagen.

Für die Methanol-Reformierung werden überwiegend Katalysatoren unter Verwendung der Unedelmetalle Kupfer, Zink, Chrom, Eisen, Kobalt und Nickel eingesetzt. Besonders vorteilhaft sind Katalysatoren auf Basis von CuO/ZnO, mit denen Selektivitäten von mehr als 95% erreichbar sind. Es sind Katalysatoren bekannt, die vollständig aus CuO und ZnO bestehen und zum Beispiel durch Co-Fällung aus einer Lösung von Kupfernitrat und Zinknitrat erhältlich sind. Nach der Co-Fällung wird das erhaltene Material gewöhnlich an Luft calciniert, um die ausgefällten Verbindungen der Metalle zu zersetzen und in die entsprechenden Oxide zu überführen. Abschließend wird der Katalysator zum Beispiel in der Gasphase reduziert.

Alternativ kommen auch sogenannte Trägerkatalysatoren zum Einsatz, bei denen ein poröser Träger oder ein feinteiliges, poröses Trägermaterial mit Lösungen von Kupfernitrat und Zinknitrat imprägniert, calciniert und reduziert wird. Als Träger oder Trägermaterial wird in diesen Fällen überwiegend Aluminiumoxid eingesetzt, aber auch Zirkonoxid, Titanoxid, Zinkoxid und Zeolithe werden verwendet.

Die so erhaltenen feinteiligen Katalysatormaterialien werden in der Regel zu kugelförmigen Formkörpern, sogenannten Pellets, verarbeitet oder in Form einer Beschichtung auf Tragkörper aufgebracht. Zur Unterscheidung von den Pellet-Katalysatoren werden diese Katalysatoren im folgenden als Beschichtungs-Katalysatoren bezeichnet. Zur Beschichtung der Tragkörper kommen zum Beispiel die bei der Herstellung von monolithischen Autoabgaskatalysatoren bekannten Verfahren zum Einsatz. Hierzu wird zum Beispiel das feinteilige Katalysatormaterial, gegebenenfalls unter Zusatz geeigneter Bindemittel, in Wasser dispergiert. Die Tragkörper werden dann durch Eintauchen in die Beschichtungsdispersion mit dem Katalysatormaterial beschichtet. Zur Fixierung der Beschichtung auf dem Tragkörper wird sie getrocknet und dann calciniert.

Die Tragkörper für die Beschichtungs-Katalysatoren dienen nur als Unterlage für die katalytisch aktive Beschichtung. Es handelt sich dabei um makroskopische Körper, die nicht mit dem Trägermaterial für die katalytisch aktiven Komponenten verwechselt werden dürfen. Als Tragkörper eignen sich Wärmetauscherbleche oder Wabenkörper aus Keramik oder Metallfolien. Beispielsweise können hierfür die auch für die Abgasreinigung von Verbrennungsmotoren verwendeten Wabenkörper aus Cordierit eingesetzt werden. Sie besitzen in einem engen Raster über den Querschnitt angeordnete achsenparallele Strömungskanäle für die Reaktanden. Die Anzahl der Strömungskanäle pro Querschnittsfläche wird als Zelldichte bezeichnet. Die Wandflächen dieser Strömungskanäle tragen die Katalysatorbeschichtung.

Aus der DE 19721751 C1 und der EP 0884273 A1 ist bekannt, daß Katalysatoren auf Basis von CuO/ZnO im Betrieb eine Schrumpfung um bis zu 40% und eine Abnahme der spezifischen Aktivität zeigen. Die DE 19721751 C1 löst das Problem der Schrumpfung bei Katalysatorschichten auf einem Blech durch Anbringen von Dehnungsfugen in den Schichten. Gemäß der EP 0884273 A1 wird die nachlassende Aktivität einer Pelletschüttung eines Cu/ZnO-Katalysators auf einem Träger aus Aluminiumoxid durch periodische Regenerierung zumindest teilweise rückgängig gemacht.

In der JP 57007255 A2 (gemäß CA 96:145940) werden Katalysatoren beschrieben, die durch eine zweistufige Imprägnierung von mit Zirkonoxid beschichteten Aluminiumoxid-Pellets mit einem oder zwei Metallen beziehungsweise Metalloxiden aus Kupfer, Zink, Chrom, Eisen, Kobalt und Nickel und mit Platin oder Palladium erhalten werden. Ein typischer Katalysator enthält 10 Gew.-% Kupferoxid, 0,3 Gew.-% Palladium und 20 Gew.-% Zirkonoxid auf den Pellets aus Aluminiumoxid.

Neben den Katalysatoren auf Basis von Unedelmetallen werden auch die Edelmetalle der Platingruppe, insbesondere Platin, Palladium und Rhodium auf oxidischen Trägermaterialien wie Aluminiumoxid, Titanoxid und Zirkonoxid für die Reformierung von Methanol eingesetzt. Diese Katalysatoren führen zur Methanolspaltung nach Reaktionsgleichung (2) mit einem Gehalt des Produktgases an Kohlenmonoxid von bis zu 33 Vol.-%. Für die Dampfreformierung von Methanol sind solche Katalysatoren wenig geeignet. Beispielhaft genannt seien hier die EP 0201070 A2, JP 60137434 A2 (gemäß CA 104:185977), JP 04362001 A (gemäß WPI 93-033201) und JP 03196839 A (gemäß WPI 91-298480).

Die JP 60082137 beschreibt einen Katalysator für die Methanolspaltung, der wenigstens eines der Edelmetalle Platin und Palladium auf einem Träger aus Aluminiumoxid enthält, wobei der Träger in einer Vorbehandlung mit Zinkoxid und/oder Chromoxid beschichtet wurde. Zur Vorbeschichtung wird der Träger aus Aluminiumoxid mit einer wässrigen Lösung von Zinknitrat und/oder Chromnitrat imprägniert und anschließend calciniert. Danach wird der vorbehandelte Träger mit einer wässrigen Lösung einer Edelmetallverbindung imprägniert, getrocknet, calciniert und unter Wasserstoff reduziert.

Es ist weiterhin bekannt, daß Katalysatoren, die auf einem Träger aus Zinkoxid Palladium enthalten auch für die Dampfreformierung von Methanol eingesetzt werden können. In "Highly selective supported Pd catalysts for steam reforming of methanol", Catal. Lett. 19 (1993) 211-216, untersuchen N. Takezawa et al. die Abhängigkeit der spezifischen Selektivität unterschiedlicher Pulverkatalysatoren aus Palladium auf Zinkoxid. Die Katalysatoren werden durch Imprägnieren von Zinkoxid mit Palladiumnitrat $Pd(NO_3)_2$, Trocknen und dreistündiges Calcinieren bei 500°C in Luft hergestellt. Pulverkatalysatoren mit einer Palladiumbeladung von 1 Gew.-% zeigen eine hohe Selektivität für Kohlendioxid von 97%. Die Wasserstoffproduktivität beträgt allerdings nur 0,6 $Nm^3/(kg \cdot h)$.

In der JP 05049930 A werden Pulverkatalysatoren aus Palladium und Zinkoxid beschrieben, die durch Co-Fällen von Palladiumnitrat und Zinknitrat und anschließendes Calcinieren bei 500°C hergestellt werden. Die größte Wasserstoffproduktivität von 2,7 $Nm^3/(kg \cdot h)$ bei 220°C wird mit einem Katalysator erhalten, der 15 Gew.-% Palladium aufweist.

N. Takezawa et al. weisen in "Steam reforming of methanol over Pd/ZnO: Effect of the formation of PdZn alloys upon reaction", Appl. Catal. A 125, 1995, 145-157, darauf hin, daß die katalytische Funktion von Palladium/Zinkoxid-Katalysatoren durch die Bildung einer PdZn-Legierung deutlich verbessert werden kann. Zur Herstellung eines solchen Katalysators wird zunächst Zinkoxid mit Palladiumnitrat imprägniert, getrocknet und bei 500°C für die Dauer von 3 Stunden in Luft calciniert. Die PdZn-Legierung wird durch Reduktion des Katalysators bei erhöhten Temperaturen gebildet. Die Untersuchungen von Takezawa zeigen, daß die Legierungsbildung erst bei Reduktionstemperaturen von 500°C abgeschlossen ist. Die so vorbehandelten Katalysatoren besitzen eine sehr hohe Selektivität, aber eine deutlich geringere Aktivität als die bekannten Kupfer/Zinkoxid-Katalysatoren $Cu/ZnO/Cr_2O_3$ (30 Gew.-% Cu) und $Cu/ZnO/Al_2O_3$ (30 Gew.-% Cu). Eine ausführliche Untersuchung der PdZn Legierungsbildung beschreibt N. Takezawa in "Selective PdZn alloy formation in the reduction Pd/ZnO catalysts", Bull. Chem. Soc. Jpn. 71, 1451-1455(1998).

In "Steam reforming of methanol over Ni, Co, Pd and Pt supported on ZnO", React. Kinet. Catal. Lett. Vol 55, No 2, 349-353 (1995), wird gezeigt, daß neben Pd/ZnO auch Pt/ZnO eine sehr hohe Selektivität für die Dampfreformierung von Methanol besitzt.

In "New catalytic functions of Pd-Zn, Pd-Ga, Pd-In, Pt-Zn, Pt-Ga and Pt-In alloys in the conversions of methanol", Catal. Lett. 54 (1998) 119-123, beschreiben N Takezawa et al. Katalysatoren für die Reformierung von Methanol auf der Basis von Legierungen des Typs Pd-Zn, Pd-Ga, Pd-In, Pt-Zn, Pt-Ga und Pt-In. Von den getesteten Katalysatoren zeigt Pd/ZnO bei 220°C die größte Selektivität und Aktivität bei der Dampfreformierung von Methanol.

Die bekannten Katalysatoren für die Dampfreformierung von Methanol auf der Basis von Palladium auf Zinkoxid zeigen eine gute Kohlendioxid-Selektivität, die sich durch eine gezielte Bildung einer Palladium/Zink-Legierung noch verbessern läßt. Die aus den mitgeteilten Daten zu ermittelnden spezifischen Wasserstoffproduktivitäten von maximal 2,7 $Nm^3/kg \cdot h$ sind jedoch noch verbesserungsbedürftig. Darüber hinaus handelt es sich bei den beschriebenen Katalysatoren dieser Art durchweg um Pulverkatalysatoren, die sich nur sehr schlecht für die Verwendung in Methanolreformern in Kraftfahrzeugen eignen.

Die Katalysatorpulver lassen sich zwar prinzipiell zu Formkörpern wie zum Beispiel Tabletten oder Kugeln verarbeiten und dann in Form einer Katalysator-Schüttung verwenden, die erschwerte Zugänglichkeit der Reaktanden zu den katalytisch aktiven Zentren im Innern der Formkörper vermindert jedoch automatisch die Wasserstoffproduktivität und damit die erzielbare Raum-Zeit-Ausbeute. Dies hat entsprechend negative Auswirkungen auf das Volumen des benötigten Reaktors. Die unter Umständen für die Formgebung notwendigen Bindemittel verschlechtern die Wasserstoffproduktivität weiter. Die durch den Fahrbetrieb des Kraftfahrzeugs hervorgerufenen Erschütterungen führen außerdem zu einem ungewollten Abrieb der Formkörper, der die Strömungswege in der Schüttung verstopft und damit den Druckabfall im Reaktor ständig erhöht.

Abhilfe könnten hier die erwähnten Beschichtungs-Katalysatoren schaffen. Von den Erfindern durchgeführte Beschichtungsversuche zeigten jedoch, daß Pd/ZnO-Katalysatorpulver aufgrund ihrer Basizität zu einer thixotropen Beschichtungsdispersion führen, die sich schwer verarbeiten läßt und zu wenig reproduzierbaren Beschichtungsergebnissen führt. Insbesondere lassen sich hiermit Wabenkörper mit einer hohen Zellenzahl nur sehr schlecht beschichten.

Die resultierenden Beschichtungen weisen zudem eine ungenügende Haftfestigkeit auf. Die Beimengung von Bindemitteln zum Katalysatorpulver zur Behebung dieses Mangels ist unerwünscht, da dies die erzielbare Wasserstoffproduktivität vermindert.

Die WO 89/00886 offenbart unter anderem einen Pd/Zn-Katalysator auf einem Trägermaterial wie zum Beispiel Siliciumdioxid, Titandioxid, Seltenerdoxide und Aluminumoxid für die Niederdruckhydrierung von Carbonylgruppen enthaltenden organischen Verbindungen. Der Katalysator ist zum Beispiel dadurch erhältlich, daß das Trägermaterial mit einer gemeinsamen Lösung von Vorstufen des Zinks und des Palladiums imprägniert, in einem Sauerstoff enthaltenden Gas bei 200 bis 400°C und anschließend in einer reduzierenden Atmosphäre behandelt wird. Der Katalysator wird in Pulverform für die Niederdruckhydrierung von organischen Verbindungen eingesetzt.

Die GB 2276332 A offenbart einen Katalysator für das Ersetzen von Halogenen in Halogen enthaltenden organischen Verbindungen. Es wird ein Pd/ZnO/$\gamma$-Al$_2$O$_3$ Katalysator eingesetzt, der durch Imprägnieren von Aluminiumoxid mit Palladiumnitrat und Zinkoxid mit anschließender Calcinierung bei 230°C gefolgt von einer Reduktion bei 500°C hergestellt wird. Der Katalysator wird in Pulverform für die Dehalogenierung eingesetzt.

Es ist daher Aufgabe der vorliegenden Erfindung für die Verwendung bei der Reformierung von Methanol einen Katalysator mit hoher Selektivität und spezifischer Wasserstoffproduktivität bereitzustellen. Für den Katalysator wird bei einer Reaktortemperatur von 300°C eine Wasserstoffproduktivität von mehr als 20 Nm$^3$/kg·h bei gleichzeitiger Kohlendioxid-Selektivität von mehr als 95% angestrebt. Darüber hinaus sollte der Katalysator bis zu einer Reaktortemperatur von 400°C einsetzbar sein. Ein weiterer wesentlicher Gesichtspunkt der Erfindung ist die Eignung des Katalysators für die Beschichtung von Tragkörpern aus Keramik oder Metall ohne den Zusatz von Bindemitteln, die die spezifische Produktivität des Katalysators vermindern würden.

Diese Aufgabe wird gelöst durch die Verwendung eines Katalysators für die Dampfreformierung von Methanol, welcher als katalytisch aktive Komponenten eine Palladium/Zink-Legierung und Zinkoxid enthält, wobei die katalytisch aktiven Komponenten auf wenigstens einem Trägermaterial aus der Gruppe Aluminiumoxid, Aluminiumsilikat, Titanoxid, Zirkonoxid, Zeolithe und Mischungen oder Mischoxiden davon in einer Menge von 0,5 bis 10 Gew.-% der Palladium/Zink-Legierung und 1 bis 50 Gew.-% Zinkoxid, jeweils bezogen auf das Gesamtgewicht des Katalysators, abgeschieden sind und der Katalysator bei der DampfreformierungvonMethanol eineWasserstoffproduktivität von mehr als 20 Nm$^3$/kg·h bei einer Reaktortemperatur von 300°C besitzt. Der Gesamte Palladium gehalt geht mit dem Zink eine Legierung ein. Das für den Katalysator zum Einsatz kommende Trägermaterial sollte eine spezifische BET-Oberfläche (gemessen nach DIN 66132) von mehr als 5, bevorzugt mehr als 50 m$^2$/g, aufweisen.

Der Katalysator zeichnet sich in der erfindungsgemäßen Verwendung durch eine hohe spezifische Wasserstoffproduktivität von mehr als 20 Nm$^3$/kg$_{Kat}$·h bei einer Reaktortemperatur von 300°C aus, die von den aus dem Stand der Technik bekannten Katalysatoren bisher nicht erreicht wurde. Wird als Trägermaterial Aluminiumoxid verwendet, so zeigt der Katalysator bei einer Temperatur von 350°C sogar ein spezifische Wasserstoffproduktivität von bis zu 60 Nm$^3$/kg$_{kat}$·h bei einr gleichzeitigen Kohlendioxid-Selektivität von mehr als 95%. Dieser gute Wert für die Selektivität war nicht zu erwarten, da bekanntermaßen Aluminiumoxid bei der Dampfreformierung von Methanol die Bildung von Dimethylether als Nebenprodukt fördert (H. Takahashi et. al; "Steam Reforming of methanol over Group VIII metals supported on SiO$_2$, Al$_2$O$_3$ and ZrO$_2$"; React. Kinet. Catal. Lett., Vol. 52, No. 2, 303-307 (1994)). Im Gegensatz zu den Ergebnissen dieser Literaturstelle konnte mit dem erfindungsgemäß zu verwendenden Katalysator keine Bildung von Dimethylether beobachtet werden.

Bevorzugt wird als Trägermaterial ein aktives Aluminiumoxid gewählt. Als aktive Aluminiumoxide werden feinteilige Aluminiumoxide bezeichnet, welche die Kristallstrukturen der sogenannten Übergangsphasen des Aluminiumoxids aufweisen und hohe spezifische Oberflächen bis zu 400 m$^2$/g besitzen. Hierzu gehören chi-, delta-, gamma-, kappa-, theta- und eta-Aluminiumoxid (siehe "Ullmann's Encyclopedia of Industrial Chemistry", fifth edition, Vol. A1, 560 - 562, 1985). Zur Stabilisierung des Aluminiumoxids gegenüber thermischen Belastungen kann es in bekannterweise mit 0,5 bis 10 Gew.-% Lanthanoxid, bezogen auf sein Gesamtgewicht, dotiert sein.

Der Katalysator weist neben wenigstens einem der genannten Trägermaterialien noch zusätzlich feinteiliges Zinkoxid als Trägermaterial für die katalytisch aktiven Komponenten auf. Auch in diesem Fall enthält der Katalysator 0,5 bis 10 Gew.-% der Palladium/Zink-Legierung und 1 bis 50 Gew.-% Zinkoxid, jeweils bezogen auf das Gesamtgewicht des Katalysators.

Der Katalysator kann zu Formkörpern verformt sein. Als Formkörper eignen sich Tabletten, Pellets, Extrudate oder Granulate. Die katalytisch aktiven Komponenten liegen in diesem Fall homogen über den Querschnitt des Formkörpers verteilt vor. Durch die homogene Verteilung wird ein großer Teil der katalytisch aktiven Komponenten wegen der schlechten Zugänglichkeit für die Reaktanden nur unzureichend genutzt. Außerdem besteht durch den verlängerten Kontakt der Reaktanden mit den katalytisch aktiven Komponenten im Inneren der Formkörper eine erhöhte Gefahr der Bildung von Nebenprodukten und damit einer Verminderung der Selektivität. Günstiger ist es daher, wenn das Trägermaterial zu Formkörpern geformt ist und die katalytisch aktiven Komponenten, nämlich die PdZn-Legierung und Zinkoxid, im wesentlichen in einer Oberflächenschale mit einer Dicke von 50 bis 500 μm auf den Formkörpern vorliegen. Dadurch werden die katalytisch aktiven Komponenten besser ausgenutzt und die Selektivität der katalytischen Umsetzung verbessert sich.

Bevorzugt wird der Katalysator in Form einer Beschichtung auf Tragkörpern aus Keramik oder Metall eingesetzt. Besonders geeignet sind hierfür die bekannten Wabenkörper aus der Autoabgasreinigung mit Zelldichten (Anzahl der Strömungskanäle pro Querschnittsfläche) von mehr als 10 cm$^{-2}$. Im Gegensatz zu den bekannten trägerlosen PdZn/ZnO-Legierungskatalysatoren, läßt sich mit dem erfindungsgemäßen, geträgerten Legierungskatalysator ohne Verwendung weiterer Bindemittel eine haftfeste Beschichtung auf den üblichen Tragkörpern für Katalysatoren herstellen. Hierzu gehören auch Metallbleche, Wärmetauscherplatten, keramische oder metallische Schaumkörper und unregelmäßig geformte Bauteile.

Wesentlich für den Katalysator ist die möglichst vollständige Legierungsbildung zwischen Palladium und Zink, wobei überschüssiges Zink im Katalysator als Zinkoxid vorliegt. Die möglichst vollständige Legierungsbildung kann durch geeignete Maßnahmen bei der Herstellung des Katalysators gewährleistet werden.

Eine Möglichkeit der Herstellung des Katalysators besteht darin, daß das Trägermaterial des Katalysators mit einer gemeinsamen, wässrigen Lösung von löslichen Verbindungen des Zinks und Palladiums imprägniert, getrocknet und die so erhaltene Katalysatorvorstufe bei Temperaturen zwischen 300 und 550°C in oxidierender Atmosphäre calciniert und anschließend bei Temperaturen zwischen 350 und 500°C in einem wasserstoffhaltigen Gas reduziert wird.

Die Calcinierungs-Temperatur nach dem Imprägnieren des Trägermaterials muß so gewählt werden, daß die löslichen Verbindungen des Zinks und Palladiums zu den entsprechenden Oxiden zersetzt werden. Hierzu reichen Temperaturen von wenigstens 300°C aus. Temperaturen oberhalb von 550°C sollten vermieden werden, da mit zunehmender Temperatur die Gefahr der Bildung eines Spinells zwischen dem Trägermaterial und Zinkoxid steigt, insbesondere bei Verwendung von Aluminiumoxid. Die Dauer der Calcinierung wird so gewählt, daß die Verbindungen des Zinks und Palladiums möglichst vollständig zersetzt werden. Dies ist je nach gewählter Temperatur nach 1 bis 5 Stunden erreicht.

Nach der Calcinierung wird der Katalysator bei Temperaturen zwischen 350 und 500, bevorzugt zwischen 350 und 450°C, in einem wasserstoffhaltigen Gas reduziert. Dabei bildet sich die Palladium/Zink-Legierung aus. Wie eingehende Untersuchungen gezeigt haben, wird die Legierungsbildung erleichtert, wenn das Trägermaterial gleichzeitig mit der Zink- und Palladiumverbindung imprägniert und anschließend calciniert wird. Eine sequentielle Imprägnierung des Trägermaterials mit den beiden Verbindungen und zwischengeschalteter Calcinierung führt zu schlechteren Wasserstoffproduktivitäten und Kohlendioxid-Selektivitäten bei der Dampfreformierung, was durch eine nur unvollständige Legierungsbildung zwischen Zink und Palladium erklärt werden kann.

Als Zink- und Palladiumverbindungen eignen sich besonders Nitrate und Acetate, deren Säurereste bei der Calcinierung vollständig entfernt werden können. Bei der Herstellung des Legierungskatalysators in Form eines Katalysatorpulvers können auch preiswerte, chloridische Palladiumverbindungen eingesetzt werden, da sich das Chlor relativ leicht durch mehrfaches Waschen aus dem Pulverkatalysator entfernen läßt.

Das beschriebene Herstellverfahren kann auf ein als feinteiliges Pulver vorliegendes Trägermaterial angewendet werden. Die nachträgliche Verformung des resultierenden Katalysatormaterials würde aber zu einer homogenen Verteilung der katalytisch aktiven Komponenten über den Querschnitt der Formkörper mit den schon beschriebenen Nachteilen führen. Vorteilhafter ist es deshalb, das Trägermaterial erst zu verformen und dann mit den katalytisch aktiven Komponenten zu imprägnieren. Dies führt dazu, daß die katalytisch aktiven Komponente im wesentlichen innerhalb einer Oberflächenschale mit einer Dicke im Bereich zwischen 50 und 500 μm auf den Formkörpern abgeschieden werden.

Zur Herstellung eines Beschichtungs-Katalysators auf einem Tragkörper wird dieser zweckmäßigerweise zunächst mit dem Trägermaterial beschichtet und die Beschichtung dann mit den beiden katalytisch aktiven Komponenten gleichzeitig imprägniert. An diese Imprägnierung schließt sich die schon oben beschriebene Trocknung, Calcinierung und Reduktion der Beschichtung an.

Zur Herstellung eines Katalysators, welcher als weiteres Trägermaterial Zinkoxid enthält wird Zinkoxid zusammen mit wenigstens einem Trägermaterial aus der Gruppe Aluminiumoxid, Aluminiumsilikat, Titanoxid, Zirkonoxid, Zeolithe und Mischungen oder Mischoxiden davon in Wasser dispergiert. Die resultierende Dispersion ist basisch. Zu dieser basischen Dispersion wird eine saure Lösung einer Palladiumverbindung gegeben. Anschließend wird die Dispersion bei erhöhter Temperatur mit einer Base, wie zum Beispiel Natriumcarbonat, neutralisiert und dann bei gleichbleibender Temperatur mit einem wässrigen Reduktionsmittel reduziert, abfiltriert, gewaschen, getrocknet, bei Temperaturen zwischen 300 und 550°C in oxidierender Atmosphäre calciniert und anschließend bei Temperaturen zwischen 350 und 500, bevorzugt zwischen 350 und 450°C, in einem wasserstoffhaltigen Gas reduziert. Als wäßriges Reduktionsmittel eignet sich eine Lösung aus Formaldehyd und Natriumhydroxid. Neutralisation und Reduktion werden bevorzugt bei Temperaturen der Dispersion zwischen 50 und 90, insbesondere zwischen 70 und 90°C, vorgenommen.

Alternativ hierzu kann das Katalysatormaterial nach der naßchemischen Reduktion und Abfiltrierung lediglich gewaschen und dann erneut dispergiert werden. Mit Hilfe dieser Dispersion wird dann ein Tragkörper mit dem Katalysatormaterial beschichtet. Zur Fertigstellung des Beschichtungskatalysators wird die Beschichtung getrocknet, bei Temperaturen zwischen 300 und 550°C in oxidierender Atmosphäre calciniert und anschließend bei Temperaturen zwischen 350 und 500°C in einem wasserstoffhaltigen Gas reduziert.

Überraschenderweise wird bei dieser Vorgehensweise das Palladium ebenfalls vollständig mit Zink legiert, was an den guten Kohlendioxid-Selektivitäten eines auf diese Weise hergestellten Katalysators erkennbar ist, obwohl der Dispersion keine lösliche Zinkverbindung zugesetzt wird, die zusammen mit der Palladiumverbindung simultan ausgefällt werden könnte. Offensichtlich wird durch Zugabe der sauren Edelmetallösung das als feinteiliges Pulver zugesetzte Zinkoxid teilweise angelöst. Bei der Neutralisation der Dispersion mit Natriumcarbonat werden dann Palladium und das in Lösung gegangene Zink gemeinsam sowohl auf Zinkoxid als auch auf dem anderen Trägermaterial ausgefällt. Die guten Ergebnisse für die Kohlendioxid-Selektivität eines solchen Katalysators belegen, daß das Palladium bei den Reduktionsschritten während der Katalysator-Herstellung vollständig mit Zink eine Legierung gebildet hat.

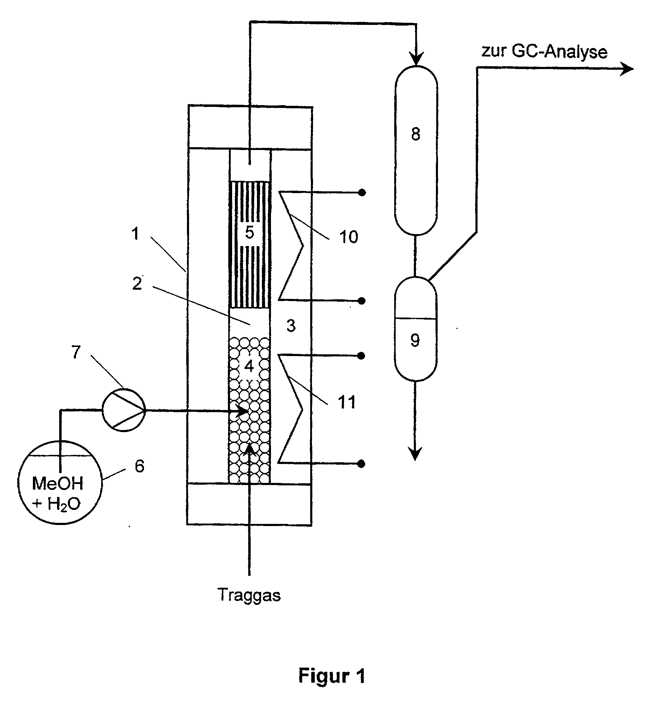

Die folgenden Beispiele und Vergleichsbeispiele dienen zur weiteren Erläuterung der Erfindung. Es wurden mehrere Katalysatoren und Vergleichskatalysatoren hergestellt. Die Prüfung der Katalysatoren erfolgte in einem elektrisch beheizten Reaktor gemäß Figur 1.

In Figur 1 bezeichnet (1) den Reaktor, (2) ein im Reaktor angeordnetes Reaktionsrohr und (3) einen Heizmantel mit zwei Heizeinrichtungen (10) und (11). Im Reaktionsrohr (2) befindet sich im unteren Teil eine Verdampfereinheit (4), welche aus einer Schüttung von Glaskugeln besteht und durch die Heizeinrichtung (11) beheizt wird. Das in der Vorlage (6) befindliche Gemisch aus Wasser und Methanol wird mittels einer Flüssigkeitspumpe (7) über die beheizten Glaskugeln verteilt und verdampft. Das dabei entstehende Gemisch aus Methanol- und Wasserdampf wird nach oben über eine Probe (5) des zu prüfenden Katalysators geführt, die durch die Heizeinrichtung (10) beheizt wird. In Figur 1 ist beispielhaft eine Probe eines mit Katalysator beschichteten Wabenkörpers eingezeichnet. Das Produktgasgemisch wird am Kopf des Reaktors entnommen und in den Kondensator (8) geleitet, in welchem die kondensierbaren Bestandteile des Produktgases verflüssigt und im Abscheider (9) von der Gasphase getrennt werden. Die abgetrennte Gasphase wird mit Hilfe der Gaschromatografie auf ihre Bestandteile analysiert. Am unteren Ende des Reaktors (1) kann ein Traggas für das Methanol- Wasserdampfgemisch eingeführt werden.

Die Katalysatoren der folgenden Beispiele und Vergleichsbeispiele wurden alle bei einem stöchiometrischen Verhältnis von Wasser zu Methanol von 1,5 (steam-to-carbon ratio = S/C = 1,5) und einer Raumgeschwindigkeit von LHSV = 5 $h^{-1}$ (LHSV: Liquid hourly space velocity), bezogen auf Methanol, geprüft. Es wurden jeweils für verschiedene Reaktionstemperaturen die Kohlendioxid-Selektivität $S_{CO2}$ gemäß Gleichung (5), die Konzentration von Kohlenmonoxid im trocknen Produktgas sowie die spezifische Wasserstoffproduktivität $P_{Kat}$ gemäß Gleichung (4), bezogen auf die Katalysatormasse (ohne die Masse des gegebenenfalls verwendeten Tragkörpers), und die spezifische Wasserstoffproduktivität $P_{Pd}$, bezogen auf die Masse des eingesetzten Palladiums, bestimmt.

Die Ergebnisse sind in den Tabellen 1 bis 5 zusammengestellt.

### Beispiel 1:

Ein Beschichtungs-Katalysator A auf einem Wabenkörper wurde wie folgt hergestellt:

Ein keramischer Wabenkörper mit 62 Zellen pro Quadratzentimeter und einem Volumen von 0,063 l wurde durch Tauchen in eine wässrige Dispersion von γ-Aluminiumoxid (spezifische Oberfläche: 140 $m^2$/g)und zweistündiges Calcinieren bei 600°C mit 7,25 g γ-Aluminiumoxid beschichtet. Nach der Calcinierung wurde der beschichtete Wabenkörper durch Tauchen in eine Zinknitrat und Palladiumnitrat enthaltende Lösung (113,4 g $Pd(NO_3)_2$ und 768,5 g $Zn(NO_3)_2 \cdot 6H_2O$ in einem Liter Wasser) imprägniert. Nach zweistündiger Calcinierung bei 500°C an Luft wurde der Wabenkörper für 2 Stunden bei 400°C unter strömendem Formiergas (95 Vol.-% $N_2$ und 5 Vol.-% $H_2$) reduziert.

Die katalytisch aktive Beschichtung des so hergestellten Katalysators hatte ein Gesamtgewicht von 8,78 g, entsprechend 139,3 g pro Liter Volumen des Wabenkörpers. Sie enthielt 5,8 Gew.-% PdZn-Legierung, 11,6 Gew.-% ZnO und 82,6 Gew.-% $Al_2O_3$, jeweils bezogen auf das Gesamtgewicht der katalytisch aktiven Beschichtung.

**Tabelle 1:** Reformierungsergebnisse an Katalysator A.

| T [°C] | $S_{CO2}$ [%] | CO-Konzentration im trockenen Produktgas [Vol.-%] | $P_{Kat}$ $\left[\dfrac{Nm^3}{kg_{Kat} \cdot h}\right]$ | $P_{Pd}$ $\left[\dfrac{Nm^3}{g_{Pd} \cdot h}\right]$ |
|---|---|---|---|---|
| 300 | 97 | 0,7 | 37,8 | 0,8 |
| 350 | 95 | 1,2 | 60,7 | 1,3 |
| 400 | 95 | 1,2 | 66,2 | 1,4 |

**Beispiel 2:**

Ein Pellet-Katalysator B wurde wie folgt hergestellt:

Eine Menge von 125 g Katalysatorträger ($\gamma$-Aluminiumoxid, Kugeln, 2-4 mm Durchmesser; spezifische Oberfläche 100 m2/g) wurde nach dem Prinzip der Porenvolumenimprägnierung mit 0,088 l einer wässrigen Lösung von 2,49 g $Pd(NO_3)_2$ und 137 g $Zn(NO_3)_2 \cdot 6H_2O$ imprägniert und für 15 min bei 80°C getrocknet. Hierbei entsprach das Volumen des verwendeten Lösungsmittels in etwa der Wasseraufnahmekapazität des Trägermaterials. Anschließend wurden die imprägnierten Katalysatorträger bei 500°C für 3 Stunden calciniert und dann bei 400°C für 2 Stunden unter strömendem Formiergas reduziert.

Der fertige Katalysator enthielt 1,2 Gew.-% PdZn-Legierung, 22,4 Gew.-% ZnO und 76,6 Gew.-% $Al_2O_3$, jeweils bezogen auf das Gesamtgewicht des Pellet-Katalysators. Die PdZn-Legierung und Zinkoxid sind bei diesem Katalysator im wesentlichen in einer Oberflächenschale von etwa 250 $\mu$m Dicke angeordnet.

**Tabelle 2:** Reformierungsergebnisse an Katalysator B.

| T [°C] | $S_{CO2}$ [%] | CO-Konzentration im trockenen Produktgas [Vol.-%] | $P_{Kat}$ $\left[\dfrac{Nm^3}{kg_{Kat} \cdot h}\right]$ | $P_{Pd}$ $\left[\dfrac{Nm^3}{g_{Pd} \cdot h}\right]$ |
|---|---|---|---|---|
| 220 | 95 | 1,2 | 1,0 | 0,1 |
| 300 | 95 | 1,2 | 3,4 | 0,7 |
| 350 | 96 | 1,0 | 8,2 | 1,2 |
| 400 | 93 | 1,8 | 9,4 | 1,3 |

Die Katalysatoren A und B wurden durch Co-Imprägnieren von Aluminiumoxid mit Palladium- und Zink-Nitrat hergestellt. Bei beiden Katalysatoren werden vergleichbare Selektivitäten erreicht, wobei bei 400°C eine Verschlechterung bei dem Pellet-Katalysator zu beobachten ist. Eine mögliche Erklärung hierfür ist folgende: Beim Pellet-Katalysator B handelt es sich um einen Schalenkatalysator mit einer Schalendicke von etwa 250 μm. Der Kern des Katalysators besteht fast ausschließlich aus reinem Aluminiumoxid. Bei höherer Temperatur erhöht sich auch die Wahrscheinlichkeit, daß die Reaktanden in den Kern des Katalysators diffundieren. Der Kontakt des Methanols mit dem reinen Aluminiumoxid führt jedoch zu unerwünschten Nebenreaktionen, die die Selektivität verschlechtern.

Die Katalysatoren zeigen in bezug auf die Wasserstoffproduktivität pro Kilogramm Katalysator und Stunde deutliche Unterschiede. Die geringeren Werte beim Pellet-Katalysator B erklären sich durch den hohen Anteil katalytisch inaktiven Trägermaterials im Kern der Pellets. Die Bestimmung der Wasserstoffproduktivität pro Gramm Palladium bestätigt diese Annahme. Sie ist für beide Katalysatoren annähernd gleich und zeigt, daß die katalytisch aktiven Komponenten des Pellet-Katalysators sich vollständig in einer für die Reaktanden leicht zugänglichen Oberflächenschale befinden.

**Beispiel 3:**

Es wurde ein weiterer Beschichtungs-Katalysator C wie folgt hergestellt:

Es wurde eine Dispersion aus 36,6 g γ-Aluminiumoxid (spezifische Oberfläche 140 $m^2$/g) und 11,9 g ZnO in 400 ml Wasser hergestellt, zu der eine Lösung von 5,88 g $H_2PdCl_4$ in 100 ml Wasser zugegeben wurde. Die Dispersion wurde auf 80°C erhitzt und mit Natriumcarbonat neutralisiert. Anschließend wurden bei 80°C 12 ml einer wässrigen Lösung aus 1,65 g Formaldehyd und 0,6 g Natriumhydroxid zugegeben. Nach 15 min. Rühren wurde die Dispersion abfiltriert und dreimal mit 500 ml Wasser gewaschen. Der erhaltene Feststoff wurde mit 250 ml Wasser redispergiert.

Ein keramischer Wabenkörper mit 62 Zellen pro Quadratzentimeter und einem Volumen von 0,063 l wurde durch Tauchen in die so erhaltene Beschichtungsdispersion und nachfolgender zweistündiger Calcination bei 400°C mit 6,3 g Feststoff beschichtet. Anschließend wurde der Wabenkörper für zwei Stunden bei 400°C unter Formiergas reduziert.

Die katalytisch aktive Beschichtung des Katalysators C besaß folgende Zusammensetzung: 8,1 Gew.-% PdZn-Legierung, 19,7 Gew.-% ZnO und 72,2 Gew.-% $Al_2O_3$, jeweils bezogen auf das Gesamtgewicht der Beschichtung.

**Tabelle 3:** Reformierungsergebnisse an Katalysator C.

| T<br><br>[°C] | $S_{CO2}$<br><br>[%] | CO-Konzentration im trockenen Produktgas<br><br>[Vol.-%] | $P_{Kat}$<br><br>$\left[\dfrac{Nm^3}{kg_{Kat} \cdot h}\right]$ | $P_{Pd}$<br><br>$\left[\dfrac{Nm^3}{g_{Pd} \cdot h}\right]$ |
|---|---|---|---|---|
| 300 | 97 | 0,7 | 24,3 | 0,5 |
| 350 | 98 | 0,5 | 40,8 | 1,2 |
| 400 | 97 | 0,7 | 51,9 | 1,3 |

Katalysator C zeichnet sich durch eine sehr hohe Selektivität und entsprechend geringe CO-Gehalte im Reformat aus. Im Vergleich zu Katalysator A besitzt er jedoch eine geringere Wasserstoffproduktivität.

**Vergleichsbeispiel 1:**

Es wurde ein Pellet-Katalysator D wie folgt hergestellt:

Eine Menge von 100 g Zinkoxid-Tabletten wurde nach dem Prinzip der Porenvolumenimprägnierung mit 0,030 l einer wässrigen Lösung von 2,49 g Pd(NO$_3$)$_2$ imprägniert und für 15 min bei 80°C getrocknet. Anschließend wurden die vorbehandelten Katalysatorträger bei 500°C für 3 Stunden calciniert und abschließend bei 400°C für 2 Stunden unter Formiergas reduziert.

Der Katalysator D bestand aus 1,8 Gew.-% PdZn-Legierung und 98,2 Gew.-% ZnO.

**Tabelle 4:** Reformierungsergebnisse an Katalysator D.

| T<br><br>[°C] | S$_{CO2}$<br><br>[%] | CO-Konzentration im trockenen Produktgas<br><br>[Vol.-%] | P$_{Kat}$<br><br>$\left[\dfrac{Nm^3}{kg_{Kat} \cdot h}\right]$ | P$_{Pd}$<br><br>$\left[\dfrac{Nm^3}{g_{Pd} \cdot h}\right]$ |
|---|---|---|---|---|
| 220 | 82 | 4,5 | 0,11 | 0,024 |
| 300 | 78 | 5,5 | 0,60 | 0,13 |
| 350 | 79 | 5,3 | 0,85 | 0,19 |
| 400 | 81 | 4,8 | 1,22 | 0,27 |

Der Katalysator D zeigt eine sehr geringe Wasserstoffproduktivität, die durch den hohen Anteil von schwer zugänglichem Zinkoxid erklärt werden kann. Überraschenderweise bleibt die erreichte Selektivität hinter den bekannten Pulverkatalysatoren aus der Literatur deutlich zurück.

**Vergleichsbeispiel 2:**

Es wurde ein Beschichtungs-Katalysator E wie folgt hergestellt:

Ein keramischer Wabenkörper mit 62 Zellen pro Quadratzentimeter und einem Volumen von 0,063 l wurde durch Tauchen in eine wässrige Dispersion von γ-Aluminiumoxid (spezifische Oberfläche 140 m$^2$/g) und nachfolgender zweistündiger Calcination bei 600°C mit 7,25 g γ-Aluminiumoxid beschichtet. Anschließend wurde der beschichtete Wabenkörper durch Tauchen in eine Zinknitrat enthaltende Lösung (768,5 g Zn(NO$_3$)$_2$·6H$_2$O in einem Liter Wasser) imprägniert.

Nach einer zweistündigen Calcination bei 500°C wurde der Wabenkörper durch Tauchen in eine wässrige Lösung von Palladiumnitrat imprägniert (113,4 g Pd(NO$_3$)$_2$ in einem Liter Wasser), für zwei Stunden bei 500°C calciniert und für weitere zwei Stunden bei 400°C unter Formiergas reduziert.

Die katalytisch aktive Beschichtung des Katalysators E hatte folgende Zusammensetzung: 3,5 Gew.-% Palladium, 14,3 Gew.-% ZnO und 82,2 Gew.-% Al$_2$O$_3$.

**Tabelle 5:** Reformierungsergebnisse an Katalysator E.

| T [°C] | $S_{CO2}$ [%] | CO-Konzentration im trockenen Produktgas [Vol.-%] | $P_{Kat}$ $\left[\dfrac{Nm^3}{kg_{Kat} \cdot h}\right]$ | $P_{Pd}$ $\left[\dfrac{Nm^3}{g_{Pd} \cdot h}\right]$ |
|---|---|---|---|---|
| 300 | 55 | 11,3 | 12,7 | 0,3 |
| 350 | 60 | 10,0 | 25,1 | 0,6 |
| 400 | 64 | 9,0 | 26,3 | 0,7 |

Wie die Ergebnisse von Tabelle 5 zeigen liefert Katalysator E sowohl eine geringere Wasserstoffproduktivität als auch eine verminderte Selektivität gegenüber Katalysator A. Diese Unterschiede beruhen wahrscheinlich auf der Tatsache, daß Katalysator A durch Co-Imprägnieren der Aluminiumoxid-Beschichtung mit Palladiumnitrat und Zinknitrat hergestellt wurde, während Katalysator E durch sequentielles Imprägnieren der Aluminiumoxid-Beschichtung erhalten wurde. Offensichtlich erleichtert die Co-Imprägnierung von Palladium und Zink die Bildung der PdZn-Legierung.

Der Katalysator ist neben der Dampfreformierung von Methanol gemäß Reaktionsgleichung (1) auch für die autotherme Dampfreformierung von Methanol geeignet. Bei diesem Verfahren wird dem gasförmigen Eduktstrom eine sauerstoffhaltige Gasmischung beigemischt. Die für die endotherme Dampfreformierung benötigte Energie wird hierbei durch eine partielle Oxidation des Methanols im Reaktor zur Verfügung gestellt.

**Patentansprüche**

1. Verwendung eines Katalysators für die Dampfreformierung von Methanol, welcher als katalytisch aktive Komponenten eine Palladium/Zink-Legierung und Zinkoxid enthält, wobei die katalytisch aktiven Komponenten auf wenigstens einem Trägermaterial aus der Gruppe Aluminiumoxid, Aluminiumsilikat, Titanoxid, Zirkonoxid, Zeolithe und Mischungen oder Mischoxiden davon in einer Menge von 0,5 bis 10 Gew.-% der Palladium/Zink-Legierung und 1 bis 50 Gew.-% Zinkoxid, jeweils bezogen auf das Gesamtgewicht des Katalysators, abgeschieden sind, der gesamte Palladiumgehalt mit dem Zink eine Legierung eingeht und der Katalysator bei der Dampfreformierung von Methanol eine Wasserstoffproduktivität von mehr als 20 Nm³/kg·h bei einer Reaktortemperatur von 300°C besitzt.

2. Verwendung nach Anspruch 1,
   **dadurch gekennzeichnet,**
   **daß** das Trägermaterial ein Aluminiumoxid mit einer spezifische Oberfläche von mehr als 10 m²/g ist.

3. Verwendung nach Anspruch 2,
   **dadurch gekennzeichnet,**
   **daß** das Aluminiumoxid mit 0,5 bis 10 Gew.-% Lanthanoxid, bezogen auf das Gesamtgewicht aus Aluminiumoxid und Lanthanoxid, gegenüber thermischen Belastungen stabilisiert ist

4. Verwendung nach Anspruch 1,
   **dadurch gekennzeichnet,**
   **daß** als zusätzliches Trägermaterial für die katalytisch aktiven Komponenten Zinkoxid vorliegt.

5. Verwendung nach Anspruch 1,
   **dadurch gekennzeichnet,**

**daß** der Katalysator zu Formkörpern verformt ist.

6. Verwendung nach Anspruch 1,
**dadurch gekennzeichnet,**
**daß** das Trägermaterial zu Formkörpern geformt ist und die katalytisch aktiven Komponenten in einer Oberflächenschale mit einer Dicke von 50 bis 500 μm auf den Formkörpern vorliegen.

7. Verwendung nach Anspruch 1,
**dadurch gekennzeichnet,**
**daß** der Katalysator in Form einer Beschichtung auf einem Tragkörper vorliegt.

8. Verwendung nach Anspruch 1,
**dadurch gekennzeichnet,**
**daß** die Dampfreformierung autotherm geführt wird.

**Claims**

1. Use of a catalyst for the steam reforming of methanol that contains a palladium/zinc alloy and zinc oxide as catalytically active components, wherein the catalytically active components are deposited on at least one support material from the group comprising aluminium oxide, aluminium silicate, titanium oxide, zirconium oxide, zeolites and mixtures or mixed oxides thereof in an amount of 0.5 to 10 wt.% of the palladium/zinc alloy and 1 to 50 wt.% of zinc oxide, in each case referred to the total weight of the catalyst, the total palladium content together with the zinc forming an alloy, and the catalyst in the steam reforming of methanol has a hydrogen productivity of more than 20 Nm$^3$/kg·h at a reactor temperature of 300°C.

2. Use according to claim 1,
**characterised in that**
the support material is an aluminium oxide with a specific surface of more than 10 m$^2$/g.

3. Use according to claim 2,
**characterised in that**
the aluminium oxide is stabilised against thermal stresses with 0.5 to 10 wt.% of lanthanum oxide, referred to the total weight of aluminium oxide and lanthanum oxide.

4. Use according to claim 1,
**characterised in that**
the zinc oxide is present as additional support material for the catalytically active components.

5. Use according to claim 1,
**characterised in that**
the catalyst is formed into shaped bodies.

6. Use according to claim 1,
**characterised in that**
the support material is formed into shaped bodies and the catalytically active components are present on the shaped bodies in a surface shell 50 to 500 μm thick.

7. Use according to claim 1,
**characterised in that**
the catalyst is present in the form of a coating on a support body.

8. Use according to claim 1,
**characterised in that**
the steam reforming is carried out autothermally.

**Revendications**

1. Utilisation d'un catalyseur pour le reformage à la vapeur du méthanol, qui contient comme composant catalytiquement actif un alliage de palladium/zinc, et de l'oxyde de zinc, les composants catalytiquement actifs étant déposés sur un support du groupe constitué par l'oxyde d'aluminium, le silicate d'aluminium, l'oxyde de titane, l'oxyde de zirconium, les zéolithes et leurs mélanges ou oxydes mixtes, en une quantité de 0,5 à 10 % en poids de l'alliage de palladium/zinc et de 1 à 50 % en poids d'oxyde de zinc, toujours par rapport au poids total du catalyseur, la totalité de la teneur en palladium formant un alliage avec le zinc, et le catalyseur, dans le réformage du méthanol à la vapeur, possède une productivité d'hydrogène supérieure à 20 Nm$^3$/kg.h à une température de réacteur de 300°C.

2. Utilisation selon la revendication 1,
   **caractérisée en ce que**
   le support est un oxyde d'aluminium ayant une surface spécifique de plus de 10 m$^2$/g.

3. Utilisation selon la revendication 2,
   **caractérisée en ce que**
   l'oxyde d'aluminium est stabilisé contre les sollicitations thermiques avec de 0,5 à 10 % d'oxyde de lanthane, par rapport au poids total d'oxyde d'aluminium et d'oxyde de lanthane.

4. Utilisation selon la revendication 1,
   **caractérisée en ce que**
   de l'oxyde de zinc est présent comme support supplémentaire pour les composants catalytiquement actifs.

5. Utilisation selon la revendication 1,
   **caractérisée en ce que**
   le catalyseur est transformé en articles moulés.

6. Utilisation selon la revendication 1,
   **caractérisée en ce que**
   le support est transformé en articles moulés et les composants catalytiquement actifs se présentent en une surface ayant une épaisseur de 50 à 500 µm sur les articles moulés.

7. Utilisation selon la revendication 1,
   **caractérisée en ce que**
   le catalyseur se présente sous la forme d'un revêtement sur un support.

8. Utilisation selon la revendication 1,
   **caractérisée en ce qu'**
   on conduit le réformage à la vapeur de façon autotherme.

**Figur 1**